**Europäisches Patentamt**

**European Patent Office**

**Office européen des brevets**

(19)

(11) Veröffentlichungsnummer: **0 168 644**
**B1**

(12) **EUROPÄISCHE PATENTSCHRIFT**

(45) Veröffentlichungstag der Patentschrift:
**10.08.88**

(51) Int. Cl.⁴: **E 06 B 3/62**

(21) Anmeldenummer: **85107377.5**

(22) Anmeldetag: **14.06.85**

(54) **Profilleiste.**

(30) Priorität: **14.07.84 DE 3425987**

(43) Veröffentlichungstag der Anmeldung:
**22.01.86 Patentblatt 86/4**

(45) Bekanntmachung des Hinweises auf die Patenterteilung:
**10.08.88 Patentblatt 88/32**

(84) Benannte Vertragsstaaten:
**AT BE CH DE FR GB IT LI LU NL SE**

(56) Entgegenhaltungen:
**DE-A-1 659 673**
**DE-A-2 828 900**
**DE-U-7 616 021**
**US-A-2 654 919**
**US-A-2 759 575**

(73) Patentinhaber: **Continental Aktiengesellschaft,
Königsworther Platz 1, D-3000 Hannover 1 (DE)**

(72) Erfinder: **Bethge, Michael, Dipl.- Ing.,
Kaulbachstrasse 19, D-3000 Hannover 61 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf aus Gummi oder gummiähnlichem Kunststoff hergestellte Profilleisten zum dichtenden Einfassen und Einsetzen von Glasscheiben oder Platten in Wandöffnungen oder Fensterrahmen, mit einer von zwei Klemmlippen eingefaßten Längsnut zum Aufnehmen der Scheibe oder Platte, deren eine Klemmlippe in eine zum Aufnehmen eines Keders dienende benachbarte Langsnut hinein abbiegbar ist.

Nach einem bekannten Vorschlag (deutsche Patentschrift 1 659 673) ist die abbiegbare Klemmlippe solcher Profilleisten in ihrem der eingefaßten Scheibe oder Platte abgekehrten Randbereich so gestaltet, daß sie im Verein mit einer zweckentsprechenden Ausbildung der Kederaufnahmenut im abgebogenen Zustand verriegelt werden kann. Das Einsetzen der Scheiben oder Platten wird dadurch zwar gegenüber anderen bekannten Profilleisten-Ausführrungen wesentlich erleichtert und beschleunigt; das Abbiegen und Einrasten der beweglichen Klemmlippe über die gesamte Einfaßlänge nimmt aber doch beträchtliche Zeit in Anspruch und erweist sich besonders im Falle größerer Fensterflächen als umständlicher vorbereitender Arbeitsgang. Der Erfindung liegt demgegenüber als Aufgabe zugrunde, die aus der Praxis entstandenen Wünsche nach weiteren Vereinfachungen und Abkürzungen der notwendigen Arbeiten durch eine neuartige Gestaltung der Profilleisten zu erfüllen.

Nach der Erfindung zeichnen sich Profilleisten der eingangs geschilderten Gattung dadurch aus, daß sie mit in die Kederaufnahmenut hinein abgebogener und in einem schmalen Querschnittsrandbereich an deren Nutengrund angeformter Klemmlippe hergestellt sind, wobei dieser Querschnittsrandbereich nach dem Einsetzen der Glasscheibe oder Platte leicht von dem Nutengrund abtrennbar ist. Vorteilhaft ist die Klemmlippe an einem der eingefaßten Scheibe oder Platte im Einbauzustand abgekehrten, hakenartig Vorspringenden Querschnittsansatz am Grund der Kederaufnahmenut angeformt.

Die Erfindung sieht einen Voreinbauzustand der Profilleisten als den Fertigungszustand vor und ermöglicht dadurch den Verzicht auf bisher notwendige aber als umständlich empfundene Vorbereitungsarbeiten. Die neuartigen Profilleisten sind nach dem Anbringen an dem Fensterrahmen ohne weitere Maßnahmen sofort zum Einsetzen der Glasscheibe bereit, da die sonst hindernde äußere Klemmlippe schon von der Fertigung her sich schon im abgebogenen Zustand befindet und die Aufnahmenut für die Scheibe nicht erst zugänglich gemacht werden muß. Die häutchenartig schmale Verbindungszone der Klemmlippe am Nutengrund ist wiederum so wenig widerstandsfähig, daß sie im Verlaufe der weiteren Montagearbeiten ohne Schwierigkeiten von Hand zerrissen werden kann, um die abgelöste Klemmlippe mit dem Einlegen eines Keders in die freigewordene Aufnahmenut an die Scheibe anzudrücken und zu verriegeln.

Die Erfindung ist anhand der schematischen Darstellung eines Ausführungsbeispiels in der Zeichnung verdeutlicht. In der Zeichnung ist:

Fig. 1 ein Querschnitt durch eine erfindungsgemäße Profilleiste im Herstellungszustand und

Fig. 2 ein Querschnitt durch die Leiste nach Fig. 1 im Einbauzustand.

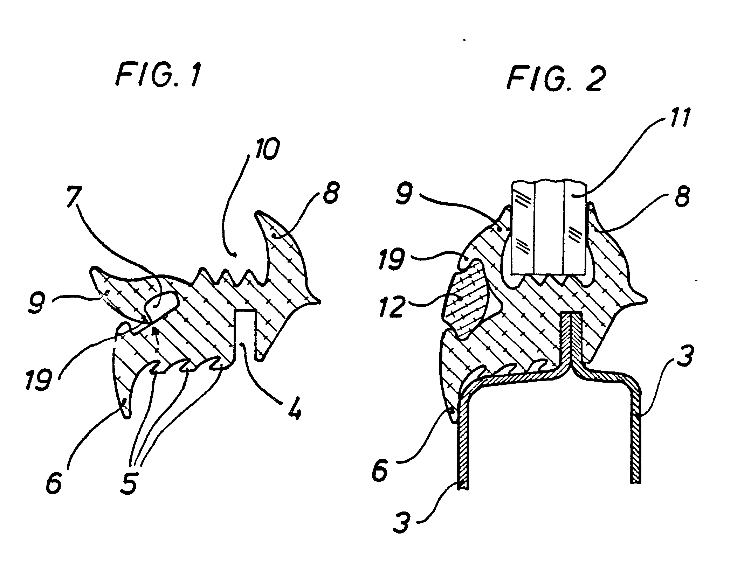

Die beispielsweise zum dichtenden Einfassen feststehender Fensterscheiben an Kraftfahrzeugen vorgesehene Profilleiste ist aus einer synthetischen Kautschukmischung mit der in Fig. 1 gezeichneten Querschnittsform in größeren Längen nach dem Strangpreßverfahren hergestellt, um nach Bedarf vom Vorrat auf die benötigte Scheibenumfangslänge gekürzt zu werden. Zum Aufstecken auf das als Fensterrahmen hergerichtete Karosserieblech (Fig. 2) ist sie mit einer tief eingeformten etwa rechteckigen Längsnut 4 und in dem nach außen an diese angrenzenden Fußbereich mit mehreren Dichtrippen 5 ausgebildet, wobei eine frei vorgezogene weitere Rippe 6 als Abschluß und Übergang zu der Karosserie-Außenwand dient und andererseits gleichzeitig die äußere Randkante einer zum späteren Einlegen eines Keders eingeformten Langsnut 7 bildet. In Gegenüberstellung zu der Rechtecknut 4 ist eine zwischen zwei Klemmlippen 8, 9 durchlaufende Aufnahmenut 10 für die aus einem Verbundglas bestehende Fensterscheibe 11 vorgesehen. Die Scheibe 11 wird nach dem Einlegen in die offene Aufnahmenut 10 durch Eindrücken eines Keders 12 in die Längsnut 7 in an sich bekannter Weise zwischen den Klemmlippen 8, 9 dichtend gefaßt und arretiert.

Erfindungsgemäß ist die nach außen gekehrte Klemmlippe 9 mit der Längskante eines an dem der Scheibe 11 im Einbauzustand abgekehrten Endbereich hakenartig vorspringenden Ansatzes 19 an den Grund der Längsnut 7 an der in Fig. 1 mit dem Pfeil bezeichneten Stelle angeformt. Die Klemmlippe 9 ist infolgedessen schon im Herstellungszustand etwa rechtwinkelig zu der Klemmlippe 8 abgebogen, so daß die Aufnahmenut 10 nach dem Aufstecken der Profilleiste auf das Karosserieblech 3 frei zugänglich ist und die Scheibe 11 ohne jede Schwierigkeit eingelegt werden kann. Andererseits ist aber die praktisch nur linienförmige Verbindungsnaht am Nutengrund so schwach, daß sie im weiteren Arbeitsablauf schrittweise über den ganzen Umfang der Fensterumrandung aufgerissen werden kann, um die Klemmlippe 9 abzulösen und nach Eindrücken des Keders 12 in seine Nut 7 dichtend an die Scheibe 11 anzupressen.

**Patentansprüche**

1. Aus Gummi oder gummiähnlichem Kunststoff hergestellte Profilleiste zum dichtenden Einfassen und Einsetzen von Glasscheiben (11) oder Platten in Wandöffnungen oder Fensterrahmen, mit einer von zwei Klemmlippen (8, 9) eingefaßten Längsnut zum Aufnehmen der Scheibe oder Platte, deren eine Klemmlippe (9) in eine zum Aufnehmen eines Keders (12) dienende benachbarte Kederaufnahmenut (7) hinein abbiegbar ist, <u>dadurch gekennzeichnet,</u> daß die Profilleiste mit in die Kederaufnahmenut (7) hinein abgebogener und in einem schmalen Querschnittsrandbereich an deren Nutengrund angeformter Klemmlippe (9) hergestellt ist, wobei dieser Querschnittsrandbereich nach dem Einsetzen der Glasscheibe (11) oder Platte leicht von dem Nutengrund abtrennbar ist.

2. Profilleiste nach Anspruch 1, <u>dadurch gekennzeichnet,</u> daß die Klemmlippe (9) an einem der eingefaßten Scheibe (11) oder Platte im Einbauzustand abgekehrten, hakenartig vorspringenden Querschnittsansatz (19) am Grund der Kederaufnahmenut (7) angeformt ist.

**Claims**

1. Profile strip, made of rubber or rubber-like plastics material, for the sealing enclosure and insertion of glass panes (11) or panels in wall openings or window-frames, having a longitudinal groove, which is enclosed by two clamping lips (8, 9), for receiving the pane or panel, one of the clamping lips (9) being bendable into an adjacent beading receiver groove (7), which serves to accommodate a beading (12), characterised in that the profile strip is produced with a clamping lip (9) which is bent into the beading receiver groove (7) and is moulded to fit in a narrow cross-sectional edge region at the groove base of the beading receiver groove, wherein this cross-sectional edge region is easily separable from the groove base after insertion of the glass pane (11) or panel.

2. Profile strip according to claim 1, characterised in that the clamping lip (9) is moulded to fit on a cross-sectional shoulder (19), which is remote from the enclosed pane (11) or panel in the installed position and extends in a hook-like manner, at the base of the beading receiver groove (7).

**Revendications**

1. Moulure profilée réalisée en caoutchouc ou en un matériau synthétique analogue au caoutchouc, pour l'entourage et le montage étanche de glaces en verre ou de plaques (11) dans des ouvertures de parois ou des encadrements de fenêtres, comportant une rainure longitudinale entourée par deux lèvres de blocage (8, 9), pour la réception de la glace ou de la plaque, et dont une lèvre de blocage (9) peut être pliée dans une rainure longitudinale adjacente (7) prévue pour recevoir un jonc (12), caractérisée en ce que la moulure profilée est réalisée avec une lèvre de blocage (9) formée dans une zone marginale étroite de sa section droite sur le fond de la rainure et pliée vers l'intérieur dans la rainure (7) de réception du jonc, cette zone marginale de section droite pouvant être facilement séparée du fond de la rainure après la mise en place de la glace ou de la plaque (11).

2. Moulure profilée selon la revendication 1, caractérisée en ce que la lèvre de blocage (9) présente un appendice de section droite (19) prévu au fond de la rainure (7) de réception du jonc, faisant saillie en forme de crochet et opposée à la glace ou plaque (11) entourée dans la condition de montage.

FIG. 1

FIG. 2